# EUROPEAN PATENT APPLICATION

(11) **EP 1 278 321 A1**
(43) Date of publication of application: **22.01.2003**
(21) Application number: 01401915.2
(22) Date of filing: 17.07.2001
(51) Int. Cl.: H04J 3/16, H04J 3/22

(54) **Different type payload transport interface for line applications at high frequency**

(71) Applicant: ALCATEL, 75008 Paris (FR)
(72) Inventor: Razzetti, Luca, 20099- Sesto San Giovanni(Milano) (IT); Lometti, Alberto, 23807 - Merate (Lecco) (IT); Bellato, Alberto, 20044 - Bernareggio (Milano) (IT); Frigerio, Silvano, 22063 - Cantu (Como) (IT)
(74) Representative: Colombo, Stefano Paolo

(57) **Abstract**

Interface and method for trasparently transporting tributary frame payload flows, the flows being of different type and/or at different clocks, said interface comprising: a multiplexing side receiving said tributary payload flows and outputting an aggregate flow; and a demultiplexer side receiving said aggregate flow and outputting single tributary payload flows, wherein it further comprises means for independently handling the tributary payload flows in order to obtain homogeneous payload flows at the same clock to be multiplexed.

## Description

The present invention relates to the field of telecommunications and in particular relates to a method and interface for efficiently managing data flows of different nature or at different clocks in line applications at high frequency.

In the telecommunications field, signals are transmitted in different manners. For istance, it is well known how to transmit signals according to the SDH or SONET and OTH standard standards. For a better understanding of both technologies reference should be made, for instance, to relevant Recommendations (ITU-T G.707 and 709) which are incorporated herewith as reference.

The OTH Standard sets forth a mechanism for transporting SDH payloads into OTH frames. Such a mechanism could be either the so-called synchronous mapping or asynchronous mapping. The synchronous mapping is based on the fact that the rate between frequencies is fixed, namely a rational number equal to 79/85. According to the synchronous mapping, no stuffing bits should be added in the OTH frame containing the SDH/SONET payload.

As it is known, TDM multiplexing is an operation for time division multiplexing a number N of digital signals (tributary signals) at a nominal bit frequency of *f*_{*t*}_{₀}. The multiplexed signal, which have been multiplexed by bit-by-bit (or byte-by-byte) interleaving, has a frequency equal to *f*_{*m*}_{₀} *> Nf*_{*t*}_{₀} and needs a frame alignment word. At the writing stage, namely at the digital multiplexer input, the tributary bits are written in a buffer with a writing frequency equal to their time bit frequency. At the reading stage for generating the multiplexed signal, the buffers of N tributaries are cyclically read with a reading frequency *f*_{*r*}_{₀}.

A network element of a telecommunication network could receive flows of signals of different type (namely SDH/SONET or OTH), thus having different bit rates, and/or flows having the same nominal bit rate but originated by different clocks. For instance, SDH STM-64 flows are at 9,95 Gb/s while flows of OTH hierarchy are at 10,709 Gb/s. In other words, even if the flows to be managed have the same frame SDH/SONET payload, they could not be simply multiplexed because they could be generated by different clocks.

Thus, the need arises to provide a single clock for the various flows that are received.

At present there is an increasing need in the telecommunications field, to provide line applications at ultra-high frequency, say around 40 Gb/s. The prior art solutions do not allow for time division multiplexed, mixed transport of SDH/SONET and OTH payload.

In this frame, the main object of the present invention is providing an optimized time division multiplexed transport interface for line applications at high or ultra-high applications which is able to manage signal frames with "mixed" payloads (namely, SDH/SONET and OTH payloads).

This and further objects are obtained by an interface having the features set forth in independent claim 1 and a method according to claim 13 Further advantageous characteristics of the present invention are set forth in respective dependent claims.

The basic idea of the present invention consists in mapping SDH/SONET payloads in "OTH like" frames in order to have only one kind of payload; then, each pure OTH and OTH-like frame of a set is mapped independently in a correspondent stuffing-frame to adapt the different payload clock precisions to a single clock. Advantageously, all these functionalities can be implemented in CMOS devices. Finally, the various stuffing frames will be serialized via SiGe serializers, and multiplexed with a synchronous SiGe bit-wise multiplexer.

The invention will become clear after reading the following detailed description, given by way of mere exemplifying and not limiting example, to be read with reference to the attached sheets of drawings wherein:
Fig. 1 shows the multiplexing side of the interface according to an embodiment of the present invention;
Fig. 2 shows the demultiplexing side of the interface according to an embodiment of the present invention; and
Fig. 3 shows a possible stuffing frame for implementing the present invention.

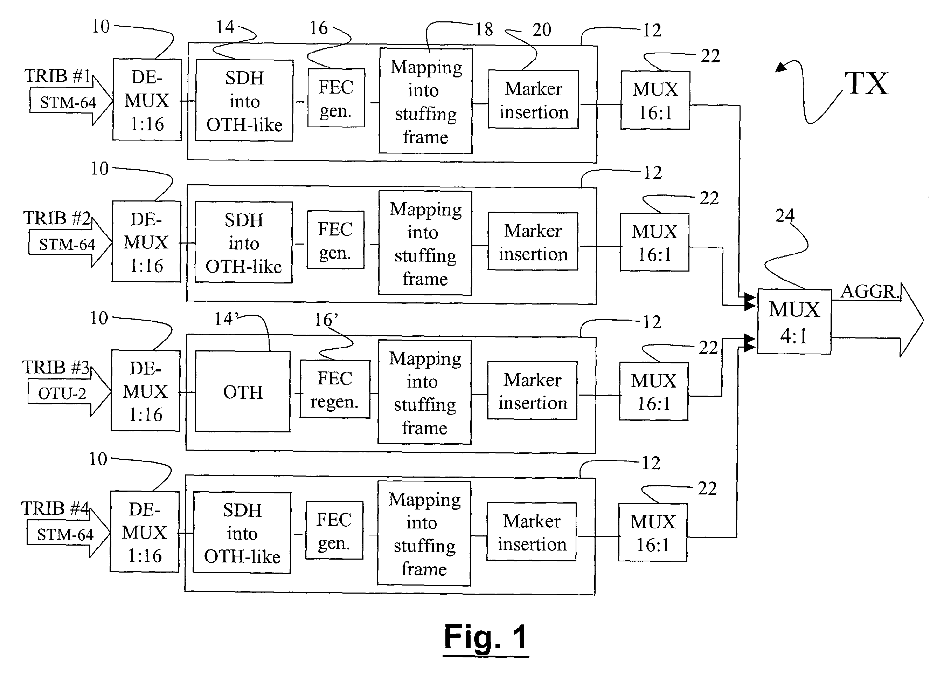

With reference first to Fig. 1, the transmitting/multiplexing side **TX** of the interface according to the present invention comprises: input ports for receiving tributary signal flows (**TRIB#1** to **TRIB#4**), a number of blocks **12** for building a corresponding number of stuffing frames, a corresponding number of demultiplexing blocks **10**, a corresponding number of multiplexing blocks **22** and an aggregator/multiplexer **24** outputting an aggregate flow.

The multiplexing side input ports are able to receive different client tributary signals, namely synchronous digital signals (SDH or SONET) and/or optical signals (OTH standard compliant). In the shown embodiment, the received signals are SDH STM-64 signals and OTU2 signals. As it is known, the SDH STM-64 signals have a nominal bit rate of 9,95 Gb/s while OTU2 signals have a nominal bit rate of 10,70 Gb/s. Thus, as in the shown embodiment the number of flows at around 10 Gb/s is four, the output aggregate signal is at around 40 Gb/s. Finally, in the shown embodiment, there are three SDH flows (**TRIB#1, TRIB#2, TRIB#4**) and one OTH flow (**TRIB#3**) but this should be considered as a non limiting embodiment.

Independently of the kind of payload carried by each flow, the signal flows enter respective stuffing frame builder blocks **12**. Preferably, the stuffing frame builder blocks **12** are made of respective CMOS devices.

Before entering the stuffing frame building blocks **12,** a demultiplexing operation is carried out by demultiplexing blocks **10** in order to operate at lower frequencies that are better handled by the stuffing frame building blocks themselves. In the shown embodiment, the frequencies after the serial-to-parallel conversion are around 600 Mb/s (622 Mb/s for the SDH flow and 666 Mb/s for the OTH flow).

In a first stage (block **14**) within the stuffing frame building blocks **12**, each payload of SDH/SONET client tributary signal is mapped in a proper OTH-like frame. Preferably, a synchronous mapping is used because the advantage consists in not providing stuffing bits. Anyway, the present invention is equally applicable to asynchronous mapping. According to the synchronous mapping, a number of SDH/SONET bits are rigidly arranged in corresponding OTH frames.

In agreement with OTH Recommendations relating to FEC, FEC bytes of pure OTH frames are decoded, corrected and regenerated (FEC regen., block **16**'). This because, any time an optical flow is electronically treated, a termination point is created and such an operation on FEC is needed. It should be noticed that FEC regen operation is performed also in case the incoming tributary is in the OTH format so that possible transmission errors will be corrected.

In case the incoming frame is an OTH-like frame (SDH/SONET payload), FEC redundancy is calculated and inserted in the OTH-like frame (FEC gen., block **16**).

In a further stage (block **18**), the pure OTH and OTH-like frames are mapped in stuffing frames (that will be disclosed below in greater detail) by using proper jitter reduction algorithms. Furthermore, stuffing ID bits and frame alignment word bits are inserted in the stuffing frames.

During the mapping of OTH frames into stuffing frames, a proper flow identification marker is inserted (**20**) in the stuffing frame. The object of the markers is to identify the signal flow where the stuffing frame comes from. In other words, markers are needed for recovering the right order of bits at the demultiplexing side. Markers are protected codes in order to avoid that line errors can change the value thereof.

In view of the fact that OTH frame is already scrambled, no further scrambling operation is performed on the stuffing frame at the multiplexing/transmission side. The reason for this is that a proper choice of overhead bits is enough for providing a good bit balance and harmonic contents in the frame.

Finally, the stuffing frames are output from the respective stuffing frame building blocks.

In order to have plesiochronous signals at 10,763 Gb/s, a multiplexing operation 16:1 is carried out by a number of MUXs 16:1 (blocks **22**).

An aggregator device (MUX 4:1, block **24**) bit-wise multiplexes the 10,763 Gb/s signals in order to obtain a serial signal at 43,05 Gb/s. It should be noticed that an advantageous feature of the present invention is that MUX **24** has only to maintain coherence of four bits and, for this reason, it is a rather simple component.

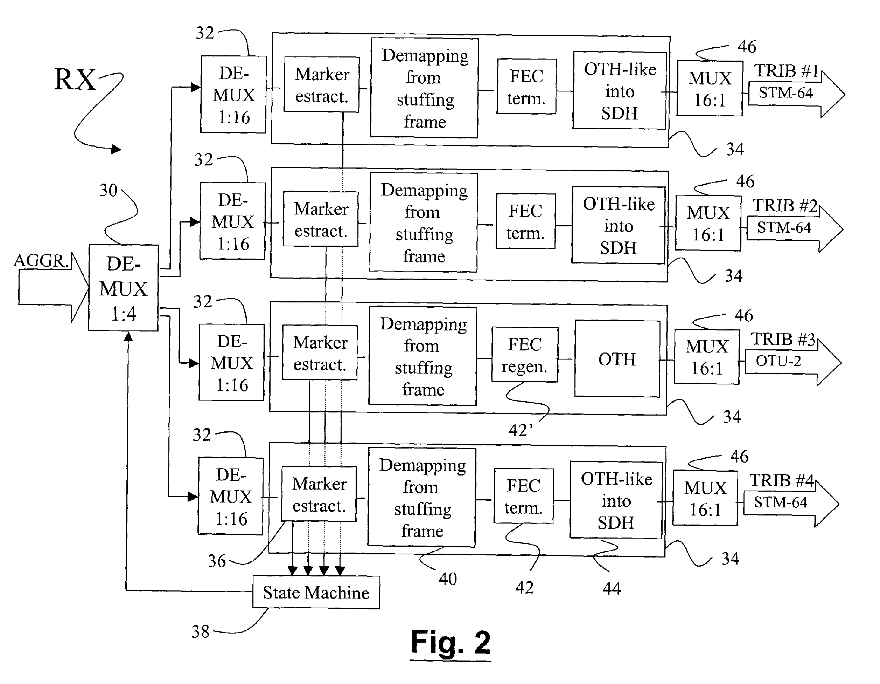

At the receiving/demultiplexing side **RX** (see Fig. 2), inverse operations are carried out, namely.

A serial link at 43,05 Gb/s enters a demultiplexer (DEMUX 1:4 block **30**). The DEMUX 1:4 block **30** carries out a bit-wise demultiplexing so that four signal flows at 10, 763 Gb/s are obtained.

Through four demultiplexing blocks (DEMUX 1:16, blocks **32**), respective demultiplexing operations are carried out on each signal flow at 10, 763 Gb/s and proper stuffing frames are originated. The object of demultiplexing 1:16 operation is to obtain stuffing frames at a rate (672 Mb/s) which could be handled by ASICs.

The stuffing frames are aligned by reading the corresponding Frame Alignment Words.

Within the ASICs **34**, acting as stuffing frame debuilder blocks, the flow identification markers are extracted (blocks **36**) from the stuffing frames. The markers are analyzed by a state machine **38** in order to recover the right order of bits. For instance, with reference to Figures 1 and 2, the stuffing frames of the first 10 Gb/s tributary flow will be marked by #1, the second 10 Gb/s tributary flow will be marked by #2, the third 10 Gb/s tributary flow will be marked by #3 and the forth 10 Gb/s tributary flow will be marked by #4. In case, at the demultiplexing side, the stuffing frames are received in the correct order, they will be marked by 1, 2, 3 and 4, respectively. It may happen to receive them in a different order, for instance 3, 4, 1 and 2. According to the order of the extracted markers, the state machine 38 will drive the DEMUX 1:4 **30** in order to carry out a phase shift and recover the right order of bits (1, 2, 3 and 4).

In a further stage within the stuffing frame debuilder blocks **34**, each payload of client tributary signal is demapped (block **40**) from OTH to SDH/SONET or OTH. Preferably, a synchronous demapping is used.

For pure OTH frames, FEC is decoded (block **42'**), corrected and regenerated (FEC regen.); for OTH-like frames, FEC redundancy is calculated and discarded (FEC term., block **42**).

Before outputting the tributary signal flows, a multiplexing operation is carried out in order to recover the original frequency around 10 Gb/s.

It is now clear that the present invention provides an effective transport interface for line applications that is able to receive signals having different payloads and transporting them at a higher frequency. The main advantage of the present invention is the use of components having lower performances and thus low cost.

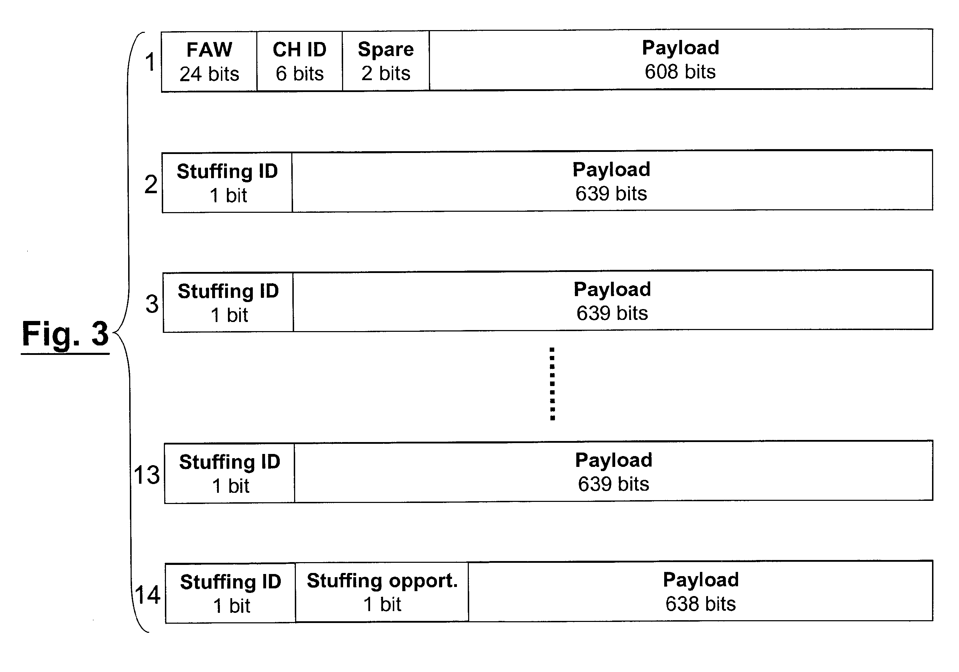

Fig. 3 shows a possible embodiment of stuffing frame in agreement with the present invention.

The stuffing frame of Fig. 3 comprises forteen sectors, with each sector having 640 (128X5) bits. Thus, the total number of bits per frame is 8960 and the payload bits are 8914 (if no stuffing is performed) or 8915.

The first sector comprises a FAW (Frame Alignment Word) of 24 bits, a marker (or channel indication) of 6 bits, two spare bits (used for signalling) and a 608-bit payload.

Sectors 2 to 13 comprise a one-bit stuffing ID (for stuffing control) and a 639-bit payload.

Finally, sector 14 comprises a one-bit stuffing ID, a one-bit stuffing opportunity and a 638-bit payload. The bit for stuffing opportunity allows for adjusting the bit rate of the incoming payloads.

An advantageous feature of the present invention is that the BER of the interface is lower than the one of the prior-art (the present optical technology does not allow for completely error free transmission at 40 Gb/s). In the interface according to the present invention, OTU-2 payload is transported as the OTH standard while SDH/SONET payload is transported with FEC facility exploiting the OTH-like frame. This results in a robust system against transmission errors.

This solution allows for transparent transporting on one (time division multiplexed) data stream of different payload signals (of SDH/SONET and OTH type), in a noisy environment. It reduces the complexity of high frequency devices, by keeping independent (and so elaborating independently) the payload signals as much as possible in the transmitting chain: thus, 40 Gb/s signals exist as such only in the bit-wise multiplexing device. In ITU-T standards, 40 Gbit/s signal is built very soon in the transmitting chain (see e.g. STM-256 or OTU3, that must be assembled in CMOS devices), and this means that CMOS devices and serializers must handle 40 Gbit/s capacity.

While the present invention has been described in detail with reference to an advantageous implementation thereof (how to manage four 10 Gb/s signal flows in order to obtain a single 40 Gb/s signal flow), the same principles can be equally applied to different configurations. For example, four SDH STM-16 signal flows (or four OTU1 signal flows) can be managed in order to obtain a 10 Gb/s signal flow. In other words, the interface could comprise any number (*n*) of stuffing frame builder blocks for managing a corresponding number (*n*) of input signal flows but the bit-wise MUX/DEMUX rates should be changed accordingly (MUX *n*:1, DEMUX 1:*n*). The signal flows entering the interface could be SDH STM-4, STM-16, STM-32, STM-64 or higher (or corresponding signal flows according to the SONET standard).

There have thus been shown and described a novel interface and a novel method which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Interface for transporting tributary frame payload flows (TRIB#1-TRIB#4) in a fundamentally transparent manner, the flows (TRIB#1-TRIB#4) being of different type and/or at different clocks, said interface comprising:
a multiplexing side (TX) receiving said tributary payload flows (TRIB#1-TRIB#4) and outputting an aggregate flow (AGGR); and
a demultiplexer side (RX) receiving said aggregate flow (AGGR) and outputting single tributary payload flows (TRIB#1-TRIB#4),
**characterized in that**
it further comprises means (10, 12, 32, 34) for independently handling the tributary payload flows in order to obtain homogeneous payload flows at the same clock to be multiplexed.

2. Interface according to claim 1, **characterized in that** said means (10, 12, 32, 34) for independently handling the tributary payload flows comprise demultiplexing blocks (10, 32).

3. Interface according to claim 1, **characterized in that** said means (10, 12, 32, 34) for independently handling the tributary payload flows comprise means (14) for mapping any SDH/SONET tributary payload frames into OTH-like tributary payload frames.

4. Interface according to claim 3, **characterized in that** said means (10, 12, 32, 34) for independently handling the tributary payload flows comprise means for calculating FEC redundancy and inserting it in the OTH-like frames.

5. Interface according to claim 1, **characterized in that** said means (10, 12, 32, 34) for independently handling the tributary payload flows comprise means (16') for decoding, correcting and regenerating FEC bytes of pure OTH tributary payload frames.

6. Interface according to claim 4 or 5, **characterized in that** said means (10, 12, 32, 34) for independently handling the tributary payload flows comprise means (18) for mapping pure OTH and/or OTH-like frames into stuffing frames.

7. Interface according to claim 6, **characterized in that** said means (10, 12, 32, 34) for independently handling the tributary payload flows comprise means (20) for inserting a marker indicative of the flow.

8. Interface according to claim 1, **characterized in that** said means (10, 12, 32, 34) for independently handling the tributary payload flows comprise means for aligning the received stuffing frames, said aligner means operating by reading frame alignment words contained in the received frames.

9. Interface according to claim 8, **characterized in that** said means (10, 12, 32, 34) for independently handling the tributary payload flows comprise means (36) for extracting markers from received stuffing frames, the markers being provided to a state machine (38) for driving a demultiplexer (30).

10. Interface according to claim 9, **characterized in that** it further comprises means (40) for demapping the received stuffing frames.

11. Interface according to claim 10, **characterized in that** it further comprises means (42') for decoding FEC bytes and/or means (42) for calculating FEC redundancy and discarding it from the demapped surfing frames.

12. Interface according to claim 11, **characterized in that** it further comprises means for mapping OTH-like frames into corresponding SDH/SONET frames.

13. Method for transporting tributary frame payload flows (TRIB#1-TRIB#4) in a fundamentally transparent manner, the flows (TRIB#1-TRIB#4) being of different type and/or at different clocks, the method comprising:
receiving said tributary payload flows (TRIB#1-TRIB#4) and outputting an aggregate flow (AGGR); and
receiving said aggregate flow (AGGR) and outputting single tributary payload flows (TRIB#1-TRIB#4),
**characterized by** the step of
independently handling the tributary payload flows in order to obtain homogeneous payload flows at the same clock to be multiplexed.

14. Method according to claim 13, **characterized in that** said step of independently handling the tributary payload flows comprises demultiplexing (10, 32) the single incoming tributary payload flows.

15. Method according to claim 13, **characterized in that** said step of independently handling the tributary payload flows comprises mapping (14) any SDH/SONET tributary payload frames into OTH-like tributary payload frames.

16. Method according to claim 15, **characterized in that** said step of independently handling the tributary payload flows comprises (16) calculating FEC redundancy and inserting it in the OTH-like frames.

17. Method according to claim 13, **characterized in that** said step of independently handling the tributary payload flows comprises decoding, correcting and regenerating (**1**6') FEC bytes of pure OTH tributary payload frames.

18. Method according to claim 16 or 17, **characterized in that** said step of independently handling the tributary payload flows comprises mapping (18) pure OTH and/or OTH-like frames into stuffing frames.

19. Method according to claim 18, **characterized in that** said step of independently handling the tributary payload flows comprises inserting (20) a marker indicative of the flow.

20. Method according to claim 13, **characterized in that** said step of independently handling the tributary payload flows comprises aligning the received stuffing frames by reading frame alignment words contained in the received frames.

21. Method according to claim 20, **characterized in that** said step of independently handling the tributary payload flows comprises extracting (36) markers from received stuffing frames and providing said extracted markers to a state machine (38) for driving a demultiplexer (30).

22. Method according to claim 21, **characterized in that** it further comprises the step (40) of demapping the received stuffing frames.

23. Method according to claim 22, **characterized in that** it further comprises the step (42') of decoding FEC bytes and/or calculating (42) FEC redundancy and discarding it from the demapped suffing frames.

24. Method according to claim 23, **characterized in that** it further comprises the step of mapping OTH-like frames into corresponding SDH/SONET frames.
